# EUROPÄISCHE PATENTSCHRIFT

(11) **EP 2 694 314 B1**
(45) Veröffentlichungstag und Bekanntmachung des Hinweises auf die Patenterteilung: **18.08.2021**
(21) Anmeldenummer: 12721733.9
(22) Anmeldetag: 10.04.2012
(51) Int. Cl.: F16D 11/14, B60K 17/04

(54) **GETRIEBEVORRICHTUNG**
TRANSMISSION DEVICE
DISPOSITIF DE TRANSMISSION

(30) Priorität: 08.04.2011 DE 102011001934; 23.05.2011 DE 102011050571
(43) Veröffentlichungstag der Anmeldung: 12.02.2014
(73) Patentinhaber: Allweier Präzisionsteile GmbH, 88662 Überlingen (DE)
(72) Erfinder: ALLWEIER, Hubert, 88662 Überlingen (DE); KOHLER, Martin, 88696 Owingen (DE)
(74) Vertreter: Heyerhoff Geiger & Partner Patentanwälte PartGmbB
(86) Internationale Anmeldenummer: PCT/DE2012/100099
(87) Internationale Veröffentlichungsnummer: WO 2012/136205

(56) Entgegenhaltungen:
- EP-A1- 1 905 633
- US-A- 4 043 226
- US-A1- 2010 187 042
- None

## Beschreibung

Die Erfindung betrifft eine Getriebevorrichtung gemäß dem Oberbegriff des Anspruchs 1.

Bekannte Radantriebe für Kraftfahrzeuge und in diesen eingesetzte Getriebevorrichtungen weisen verhältnismäßig große Durchmesser auf. Um bei einem vorgegebenen Bauraum ein möglichst großes Übersetzungsverhältnis bei gleichzeitig hohem Wirkungsgrad zu erzielen, wird in solchen Radantrieben ein Planetengetriebe als Getriebevorrichtung eingesetzt, dessen Hohlrad feststeht und dessen Planetenträger als Abtrieb ausgebildet ist. Diese Bauweise macht es erforderlich, dass ein Zentrierdurchmesser einer an die Getriebevorrichtung, beziehungsweise den Radantrieb, zu montierenden Felge größer sein muss, als der Außendurchmesser der größten Planetenstufe der verwendeten Getriebevorrichtung. Infolgedessen sind derartige Getriebevorrichtungen für einen Einsatz bei kleineren Fahrzeugen in der Regel nicht geeignet, da diese üblicherweise Breitreifen in Ballonbauweise vorsehen, bei welchen die Getriebevorrichtung, beziehungsweise der Radantrieb, tief in einer Felgenschüssel sitzt. Diese Felgenschüsseln haben jedoch einen vergleichsweise kleinen Durchmesser.

Aus EP 1 905 633 A1 ist ein motorgetriebener Radantriebbekannt, der als eine Einheit aus einem Radlager, einem Übersetzungsgetriebe und einem elektrischen Motor gebildet ist. Dabei umfasst ein erstes Planetenuntersetzungsgetriebe ein erstes Hohlrad und vier erste Planetenräder, die mit einer Außenverzahnung ausgebildet sind. Die Außenverzahnungen greifen in eine Innenverzahnung des ersten Hohlrads ein, so dass sich die ersten Planetenräder in einer Planetenbewegung entlang eines Innenumfangs des ersten Hohlrads bewegen. Jedes erste Planetenrad ist über ein Wälzlager drehbar auf einem Stützstift gelagert. Jeder Stützstift wird in eine Stirnfläche eines ersten Innenringelements durch ein zweites Hohlrad mit gleichem Abstand in Umfangsrichtung eingeschraubt.

Vor diesem Hintergrund liegt der vorliegenden Erfindung die Aufgabe zugrunde, einen Planetenträger gegenüber Belastungen durch eine auf ihm gelagerte Abtriebsnabe robuster zu machen.

Diese Aufgabe wird gelöst durch eine Getriebevorrichtung mit den Merkmalen des Anspruchs 1.

Vorteilhafte Weiterbildungen sind Gegenstand abhängiger Unteransprüche.

Die erfindungsgemäße Getriebevorrichtung weist eine als Planetenstufe ausgeführte Abtriebsstufe und eine Abtriebsnabe auf. Die Abtriebsnabe ist drehbar auf einem feststehenden Planetenträger der Abtriebsstufe gelagert.

Unter der Abtriebsstufe ist dabei die letzte Getriebestufe zu verstehen. Dies ist diejenige Getriebestufe, welche ohne Zwischenschaltung einer weiteren Getriebestufe der Getriebevorrichtung mit der Abtriebsnabe verbunden ist. Vorteilhafterweise weist die Abtriebsstufe neben dem feststehenden Planetenträger eine Antriebswelle, mehrere Planetenräder und ein Hohlrad auf.

Die Lagerung der Abtriebsnabe auf dem feststehenden Planetenträger der Abtriebsstufe ermöglicht kompakte Bauformen und damit einen flexiblen Einsatz dieser Getriebevorrichtung. Die Lagerung der Abtriebsnabe kann zudem vergleichsweise einfach an den jeweiligen Anwendungsfall angepasst werden.

Der feststehende Planetenträger der Abtriebsstufe ist vorteilhafterweise als Tragachse ausgebildet. Dies ermöglicht eine aufwandsgünstige Fertigung der Getriebevorrichtung.

Vorzugsweise ist die Abtriebsnabe verdrehfest mit einem Hohlrad der Abtriebsstufe verbunden. Dies trägt ebenfalls zu einem vergleichsweise geringen Fertigungsaufwand bei.

Wie bereits einleitend dargelegt wurde, weisen die Durchmesser bekannter Radantriebe und der darin verwendeten Getriebevorrichtungen verhältnismäßig große Durchmesser auf. Hinzu kommt, dass in denjenigen Anwendungsfällen, in welchen eine mehrstufige Getriebevorrichtung erforderlich ist, Lager unverhältnismäßig groß dimensioniert werden müssen, um über der Abtriebsstufe montiert werden zu können. Andernfalls würde sich die axiale Baugröße der Getriebevorrichtung über vorgegebene Werte hinaus vergrößern. Dies führt zu einem unverhältnismäßigen Fertigungsmehraufwand. Die erfindungsgemäße Getriebevorrichtung kann hingegen einfach, kompakt und aufwandsgünstig mit weiteren Getriebestufen ausgestattet werden. Eine vorteilhafte Ausführungsvariante der Erfindung sieht daher vor, dass der Abtriebsstufe vorgelagert mindestens eine weitere Getriebestufe angeordnet ist. Vorgelagert ist dabei dahingehend zu verstehen, dass die mindestens eine weitere Getriebestufe in Kraftflussrichtung vor der Abtriebsstufe angeordnet ist. Die weiteren Getriebestufen sind vorzugsweise als Planetenstufen ausgeführt, sodass mindestens eine weitere Planetenstufe vorliegt. Diese mindestens eine weitere Planetenstufe ist besonders bevorzugt koaxial zu der Abtriebsstufe angeordnet. Mittelachsen der mindestens einen weiteren Planetenstufe sowie der Abtriebsstufe fallen also zusammen. Dies ermöglicht eine besonders aufwandsgünstige und einfache Veränderung des Übersetzungsverhältnisses der Getriebevorrichtung.

Die wenigstens eine weitere Getriebestufe ist vorteilhafterweise als Planetenstufe mit einem feststehenden Hohlrad ausgeführt. Je nach Anwendungsfall kann die weitere Getriebestufe stattdessen als Planetenstufe mit einem umlaufenden Hohlrad ausgeführt sein. Letzteres kann insbesondere bei einer schaltbaren, mehrstufigen Getriebevorrichtung zweckmäßig sein. Bevorzugt werden alle weiteren Getriebestufen als Planetenstufen mit feststehendem Hohlrad ausgeführt.

Eine Änderung der Übersetzung der Getriebevorrichtung führt somit zu keiner Veränderung der Anbauverhältnisse an der Abtriebsnabe. Über weite Strecken können einzelne Bauteile der Getriebevorrichtung, insbesondere die verschiedenen Getriebestufen, auf die sie betreffenden Anforderungen abgestimmt werden, ohne dass dies eine Anpassung anderer Bauteile, insbesondere des Planetenträgers, beziehungsweise der Tragachse, der Abtriebsstufe erfordert. Beispielsweise kann bei entsprechender Auslegung des Planetenträgers der Abtriebsstufe, beziehungsweise der Tragachse, dieselbe Abtriebsstufe für eine Vielzahl unterschiedlich ausgelegter Getriebevorrichtungen verwendet werden. In diesen Fällen führt eine Änderung der Übersetzung somit nicht zu einer Veränderung der Anbauverhältnisse an der Abtriebsnabe.

Der Planetenträger der Abtriebsstufe, beziehungsweise die Tragachse, kann für alle Übersetzungs- und Funktionsvarianten im Grunde unverändert bleiben.

Erfindungsgemäß ist die Abtriebsnabe mittels wenigstens eines Abtriebsnabenlagers auf dem Planetenträger der Abtriebsstufe gelagert. Das wenigstens eine Abtriebsnabenlager ist dabei vorzugsweise als Gleit- oder Wälzlager ausgeführt. Unter einer Lagerung der Abtriebsnabe auf dem Planetenträger wird vorliegend sowohl die mittelbare wie auch die unmittelbare Lagerung der Abtriebsnabe auf dem Planetenträger verstanden. Beispielsweise kann die Abtriebsnabe mittelbar über ein mit dem Planetenträger der Abtriebsstufe fest verbundenes Tragelement auf dem Planetenträger der Abtriebsstufe gelagert sein.

Erfindungsgemäß ist der Planetenträger der Abtriebsstufe, oder bei mittelbarer Lagerung der Abtriebsnabe ein mit dem Planetenträger fest verbundenes Tragelement, in zumindest einem Abschnitt, in welchem ein Abtriebsnabenlager gegen den Planetenträger, beziehungsweise das Tragelement, abgestützt ist, als Hohlachse mit sich konisch verjüngendem Innendurchmesser ausgeführt. Dies kann beispielsweise mittels eines hohlkonischen Gusselements realisiert werden. Auf die beschriebenen Weise kann die Spannung im Bereich der Abtriebsnabenlager verringert werden. Erfindungsgemäß verjüngt sich der Innendurchmesser der Hohlachse in Richtung auf die Abtriebsstufe zu.

Vorteilhafterweise ist an einem Ende des Planetenträgers der Abtriebsstufe eine Spannvorrichtung angeordnet, mittels welcher wenigstens ein Abtriebsnabenlager vorspannbar ist. Als Spannvorrichtung kann eine Wellenmutter vorgesehen sein. Die Vorspannung der Abtriebsnabenlager kann mittels der Spannvorrichtung, insbesondere der Wellenmutter, komfortabel an die Anforderungen des jeweiligen Anwendungsfalls angepasst werden. Besonders bevorzugt ist die Spannvorrichtung anschlagfrei ausgeführt. Stattdessen kann die Spannvorrichtung grundsätzlich und in Abhängigkeit von einem verwendeten Lager auch mit einem Anschlag ausgeführt sein.

Bevorzugt weist der Planetenträger der Abtriebsstufe in zumindest einem Abschnitt, in welchem ein Abtriebsnabenlager gegen den Planetenträger der Abtriebsstufe abgestützt ist, einen Durchmesser auf, welcher 1,1 bis 2,5 mal so groß ist wie ein Abstand einer Mittelachse eines Planetenradbolzens der Abtriebsstufe von der Mittelachse der Abtriebsstufe. Unter einem Planetenradbolzen, teilweise kurz als Planetenbolzen bezeichnet, der Abtriebsstufe ist dabei ein Bolzen zu verstehen, auf welchem ein Planetenrad der Abtriebsstufe drehbar gelagert ist. Die Planetenradbolzen können wahlweise ein- oder beidseitig in dem zugehörigen Planetenträger aufgenommen sein. Des Weiteren können die Planetenradbolzen wahlweise mit oder ohne Bund, als glatter Bolzen oder als Bolzen mit gestuften Durchmessern ausgeführt sein. In der Praxis hat es sich bewährt, die Planetenräder über Gleit- oder Wälzlager auf den Planetenradbolzen zu lagern.

Ein Sonnenrad der Abtriebsstufe ist vorteilhafterweise mit einer Antriebswelle der Abtriebsstufe verdrehfest verbunden. Vorzugsweise sind das Sonnenrad der Abtriebsstufe und die Antriebswelle der Abtriebsstufe einstückig ausgeführt. Antriebswellen weiterer als Planetenstufen ausgeführte Getriebestufen sind bevorzugt ebenfalls verdrehfest mit einem Sonnenrad der jeweiligen Planetenstufe verbunden. Diese Verbindung ist wiederum besonders bevorzugt einstückig ausgeführt.

In einer Ausführungsvariante der Getriebevorrichtung sind die Laufverzahnungen der Abtriebsstufe und/oder wenigstens einer weiteren Getriebestufe zumindest teilweise als Schrägverzahnungen ausgeführt. Dies ermöglicht einen geräuscharmen Lauf. Schrägungswinkel der Schrägverzahnungen sind vorzugsweise derart ausgeführt, dass durch die Schrägverzahnungen entstehende Axialkräfte aufgenommen werden können, ohne dass es zusätzlicher Sicherungselemente bedarf. Das Hohlrad der Abtriebsstufe ist zu diesem Zweck vorteilhafterweise form- und/oder stoffschlüssig mit der Abtriebsnabe verbunden. Zudem kann die Antriebswelle der Abtriebsstufe in einem eingesetzten Antriebsmotor axial abgestützt werden.

Vorteilhafterweise ist ein Fluss einer in die Getriebevorrichtung eingeleiteten Kraft zu der Abtriebsnabe unterbrechbar. Beispielsweise kann der Kraftfluss von einer Eintriebswelle zu der Abtriebsnabe unterbrechbar sein. Vorzugsweise wird die beschriebene Unterbrechung mittels wenigstens einer ausrückbaren Antriebswelle realisiert. Der Begriff der Ausrückbarkeit ist dabei dahingehend zu verstehen, dass durch Versatz der Antriebswelle im Wesentlichen in Axialrichtung dieser Antriebswelle eine formschlüssige Verbindung der Antriebswelle zu einem Nabenelement unterbunden werden kann. Steht ein eintriebsseitig mit der Getriebevorrichtung verbundener Motor still, so ermöglicht die beschriebene Unterbrechbarkeit des Kraftflusses es, die Abtriebsnabe von der Abtriebsseite her anzutreiben. Auf diese Weise kann beispielsweise ein Schleppbetrieb eines Fahrzeugs ermöglicht oder ein Seil von einer mit der Abtriebsnabe verbundenen Seiltrommel von Hand abgerollt werden. Insbesondere kann bei ausgerückter Antriebswelle, beziehungsweise unterbrochenem Kraftfluss, die Abtriebsnabe in eine Drehzahl versetzt werden, welche eine maximale Drehzahl eines im jeweiligen Anwendungsfall eingesetzten Antriebsmotors übersteigt. Vorzugsweise ist die Antriebswelle der Abtriebsstufe ausrückbar ausgeführt.

Die Unterbrechung des Flusses einer in die Getriebevorrichtung eingeleiteten Kraft zu der Abtriebsnabe kann alternativ mit anderen Mitteln als der wenigstens einen ausrückbaren Antriebswelle realisiert werden, beispielsweise mittels einer Kupplung, insbesondere mittels einer Lamellenkupplung.

Bei einer vorteilhaften Ausführungsvariante ist die wenigstens eine ausrückbare Antriebswelle mit einem Keilwellenprofil versehen, vorzugsweise mit einem gerad- oder konischflankigen Keilwellenprofil. Dies ermöglicht eine effiziente Kraftübertragung auf die wenigstens eine ausrückbare Antriebswelle bei gleichzeitig guter Ausrückbarkeit.

In der Praxis hat es sich bewährt, die wenigstens eine ausrückbare Antriebswelle mit einem zylindrischen oder konischen Zentrierbund zu versehen.

Bei mehrstufigen Ausführungsvarianten der Getriebevorrichtung können eine oder mehrere Antriebswellen ausrückbar ausgeführt sein. Soweit nachfolgend von der ausrückbaren Antriebswelle die Rede ist, ist dies nicht dahingehend zu verstehen, dass alle ausrückbaren Antriebswellen wie nachfolgend beschrieben ausgestaltet sein müssen, obwohl dies grundsätzlich der Fall sein kann.

Besonders bevorzugt weist eine der ausrückbaren Antriebswelle vorgelagerte Planetenstufe einen Planetenträger auf, welcher mit einem gerad- oder konischflankigen Keilnabenprofil versehen ist, welches mit dem Keilwellenprofil dieser ausrückbaren Antriebswelle in Eingriff bringbar ist.

Sind eine oder mehrere ausrückbare Antriebswellen vorgesehen, so ist es von Vorteil, den Planetenträger derjenigen Planetenstufe, welcher der ausrückbaren Antriebswelle vorgelagert ist, zur Aufnahme dieser Antriebswelle mit einem zylindrischen oder konischen Gleitsitz zu versehen. Wie oben erläutert, kann dabei nur ein bestimmter Planetenträger, welcher einer bestimmten ausrückbaren Antriebswelle vorgelagert ist, derart ausgestaltet werden oder alle Planetenträger, welche einer ausrückbaren Antriebswelle vorgelagert und zu deren jeweiliger Aufnahme bestimmt sind.

Bei einer besonders bevorzugten Ausgestaltungsvariante der Getriebevorrichtung weist eine der ausrückbaren Antriebswelle vorgelagerte Planetenstufe einen Planetenträger mit einem Nabenprofil auf, welches mit einem Wellenprofil dieser ausrückbaren Antriebswelle in Eingriff bringbar ist, und dieser Planetenträger ist mittels wenigstens eines Axialgleitlagers in axialer Richtung gehalten.

Vorteilhafterweise ist der Planetenträger wenigstens einer Getriebestufe mit Ölfangtaschen versehen.

Bei einer vorteilhaften Ausgestaltungsvariante ist der Planetenträger der Abtriebsstufe mit Bohrungen zu Ausbildung einer Umlaufschmierung versehen. Dies hat sich insbesondere bei Getriebevorrichtungen bewährt, welche für hohe Abtriebsdrehzahlen auszulegen sind.

Im Hinblick auf eine kompakte Bauform und eine aufwandsgünstige Fertigung hat es sich bewährt, das Hohlrad der Abtriebsstufe und/oder einen Verschlussdeckel in der Abtriebsnabe aufzunehmen. Vorzugsweise sind das genannte Hohlrad und der genannte Verschlussdeckel in die Abtriebsnabe aufgenommen. Daneben hat es sich bewährt, dass ein Radialwellendichtring in der Abtriebsnabe aufgenommen ist. Dieser Radialwellendichtring läuft besonders bevorzugt auf dem Planetenträger der Abtriebsstufe. Vorteilhafterweise ist dabei ein Innendurchmesser des Radialwellendichtrings kleiner ausgeführt als ein Außendurchmesser des Hohlrades der Abtriebsstufe.

Vorzugsweise weist der Verschlussdeckel eine Ausformung zur Zentrierung einer an die Abtriebsnabe montierbaren Felge auf. Ein Durchmesser dieser Ausformung ist einfach an die im jeweiligen Anwendungsfall vorliegende Felgengröße anpassbar.

Eine vorteilhafte Ausgestaltungsvariante sieht vor, dass eine mit der ausrückbaren Antriebswelle verbundene Ausrückstange den Verschlussdeckel durchsetzt. Dies ermöglicht eine komfortable Ausrückung der ausrückbaren Antriebswelle von außerhalb der Getriebevorrichtung. Vorzugsweise ist in dem Verschlussdeckel ein die Ausrückstange in einem Abschnitt voll umfänglich umgebender Dichtring aufgenommen. Auf diese Weise kann die Dichtheit der Getriebevorrichtung nach außen gewährleistet werden.

Es ist von Vorteil, den Verschlussdeckel mit einer Arretiervorrichtung zu versehen, mittels welcher die mit der ausrückbaren Antriebswelle verbundene Ausrückstange arretierbar ist.

Auf diese Weise kann die ausrückbare Antriebswelle komfortabel in einem ausgerückten Zustand arretiert werden.

Bei einer vorteilhaften Ausgestaltungsvariante der Getriebevorrichtung bildet die Abtriebsnabe zusammen mit dem Planetenträger der Abtriebsstufe ein Dichtungslabyrinth aus. Die Dichtheit der Getriebevorrichtung kann auf diese Weise verbessert und ein Eindringen von Schmutz in die Getriebevorrichtung zuverlässig verhindert werden.

Vorzugsweise ist die Getriebevorrichtung frei von Wartungsbohrungen. Eine weitere Ausgestaltungsvariante sieht vor, dass die Getriebevorrichtung hermetisch verschlossen ist.

Vorteilhafterweise ist die Getriebevorrichtung sowohl als Einschub- wie auch Vorsatzgetriebe montierbar. Zu diesem Zweck können an beiden Stirnseiten der Getriebevorrichtung Zentrierdurchmesser vorgesehen und der Planetenträger der Abtriebsstufe mit stirnseitigen Durchgangs- und/oder Gewindebohrungen zumindest teilweise versehen sein. Sofern die Getriebevorrichtung mehrstufig ausgeführt ist, können diese Durchgangs- und/oder Gewindebohrungen an Bauteilen der weiteren Getriebestufen vorgesehen sein.

Die erfindungsgemäße Getriebevorrichtung kann wartungsfrei ausgeführt werden, insbesondere im Falle eines hermetischen Verschlusses. Die Getriebevorrichtung kann derart ausgelegt werden, dass sie während ihrer gesamten Gebrauchsdauer wartungsfrei ist. Infolge ihrer kompakten Bauform ist sie für eine Verbindung mit verschiedenen Motorbauarten geeignet. Insbesondere lässt sie sich einfach in Fahrzeugrahmen montieren. In diesem Zusammenhang erweisen sich unter anderem die genannten Zentrierdurchmesser als vorteilhaft. Optionale Zentrierdurchmesser, beziehungsweise Zentrierausformungen, können komfortabel an im jeweiligen Anwendungsfall vorhandene Felgengrößen angepasst werden. Dies gilt in ähnlicher Weise für Bauart und Größe der Abtriebsnabenlager.

Die erfindungsgemäße Getriebevorrichtung kann vorteilhaft bei einem Radantrieb, insbesondere einem Radantrieb für Kraftfahrzeuge, Verwendung finden. In diesem Anwendungsfall kann ein Antriebsmotor beispielsweise mittels der genannten Durchgangs- oder Gewindebohrungen mit der Getriebevorrichtung verbunden werden. Die Zentrierdurchmesser können dabei der Zentrierung dienen. Die Getriebevorrichtung kann darüber hinaus unter anderem bei Nabenantrieben vorteilhaft verwendet werden.

Wird die Getriebevorrichtung bei einem Radantrieb verwendet, so kann der Planetenträger der Abtriebsstufe, beziehungsweise die Tragachse, mit einem ersten Lamellenpaket einer Lamellenbremse fest verbunden sein, während ein zweites Lamellenpaket der Lamellenbremse fest mit der Abtriebsnabe verbunden ist. Die Lamellenbremse ist dabei vorzugsweise als radial innenliegende Lamellenbremse ausgeführt.

In einer alternativen Ausführungsvariante kann statt der Lamellenbremse eine Schreibenbremse vorgesehen sein, wobei der Planetenträger der Abtriebstufe, beziehungsweise die Tragachse, fest mit einem Bremssattel der Scheibenbremse und die Abtriebsnabe fest mit einer Bremsscheibe der Scheibenbremse verbunden ist. Die Scheibenbremse ist dabei vorzugsweise als radial außenliegende Scheibenbremse ausgeführt.

Die erfindungsgemäße Getriebevorrichtung eignet sich nicht nur für eine Verwendung bei Radantrieben. Zwar hat eine Verwendung bei Radantrieben unter anderem den Vorteil, dass bei Bedarf zusätzlich zur Drehmomentübertragung auch radiale und axiale Radlasten aufgenommen werden können. Doch kann die Getriebevorrichtung aufgrund ihrer kompakten Bauweise, leicht variierbarer Anschlussgeometrien und hohen Tragfähigkeit ebenso vorteilhaft bei Antrieben von Seiltrommeln, Riemenscheiben, Gelenkwellen und anderem verwendet werden.

Im Weiteren wird die Erfindung anhand von Figuren näher erläutert. Soweit zweckdienlich, sind hierin gleich wirkende Elemente mit gleichen Bezugszeichen versehen. Die Erfindung ist nicht auf die in Figuren dargestellten Ausführungsbeispiele beschränkt - auch nicht in Bezug auf funktionale Merkmale. Die bisherige Beschreibung wie auch die nachfolgende Figurenbeschreibung enthalten zahlreiche Merkmale, die in den abhängigen Unteransprüchen teilweise zu mehreren zusammengefasst wiedergegeben sind. Diese Merkmale wie auch alle übrigen oben und in der nachfolgenden Figurenbeschreibung offenbarten Merkmale wird der Fachmann jedoch auch einzeln betrachten und zu sinnvollen weiteren Kombinationen zusammenfügen. Insbesondere sind diese Merkmale jeweils einzeln und in beliebiger geeigneter Kombination mit der Getriebevorrichtung des unabhängigen Anspruchs kombinierbar. Es zeigen:
- Figur 1: Perspektivische Darstellung eines ersten Ausführungsbeispiels der erfindungsgemäßen Getriebevorrichtung
- Figur 2: Vorderansicht der Getriebevorrichtung aus Figur 1
- Figur 3: Schnittdarstellung entlang der Linie A-A durch die Getriebevorrichtung aus Figur 2
- Figur 4: Vorderansicht eines zweiten Ausführungsbeispiel der erfindungsgemäßen Getriebevorrichtung
- Figur 5: Schnittdarstellung durch die Getriebevorrichtung aus Figur 4
- Figur 6: Vergrößerte Teildarstellung des Bereichs C aus Figur 5
- Figur 7: Vergrößerte Teildarstellung des Bereichs D aus Figur 5
- Figur 8: Vergrößerte Teildarstellung des Bereichs E aus Figur 5

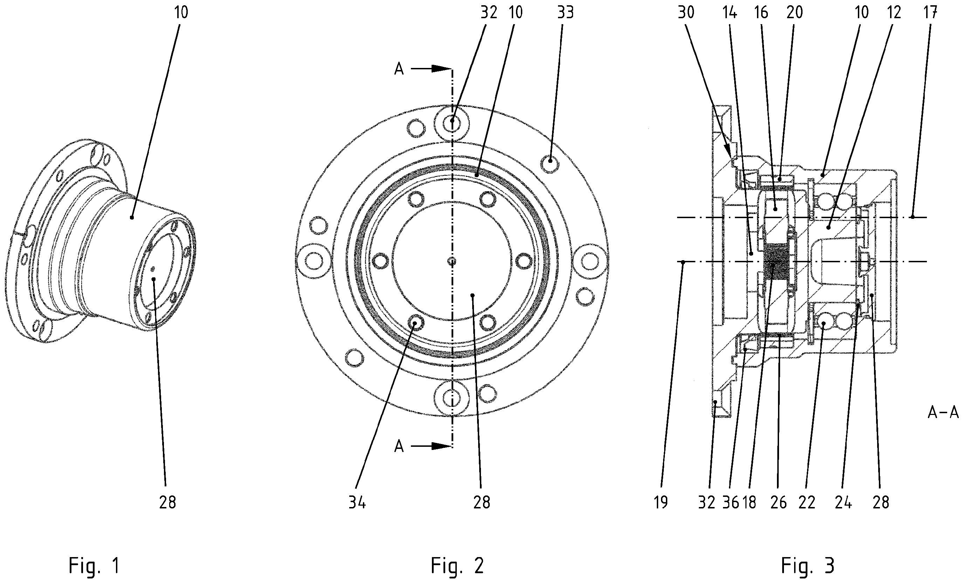

Die Figuren 1 bis 3 illustrieren ein erstes Ausführungsbeispiel der erfindungsgemäßen Getriebevorrichtung. Hierbei handelt es sich um eine einstufige Ausführungsvariante, welche für hohe Antriebsdrehzahlen bis 20.000 min⁻¹ ausgelegt ist. Zum Zwecke der Bereitstellung hoher Antriebsdrehzahlen kann die Getriebevorrichtung eingangsseitig mit jedem beliebigen Motor verbunden werden, der die gewünschten Antriebsdrehzahlen liefert. Als einstufige Ausführungsvariante weist die Getriebevorrichtung der Figuren 1 bis 3 lediglich eine Abtriebsstufe auf, welche als Planetenstufe mit einem Planetenträger 12, Planetenrädern 16, einem Hohlrad 20, einem Sonnenrad 18 und einer dazugehörigen Antriebswelle 14 ausgeführt ist. Diese Abtriebsstufe 12, 14, 16 weist eine Mittelachse 19 auf. Eine Mittelachse 17 eines Planetenradbolzens eines Plantenrades 16 verläuft parallel hierzu.

Die Getriebevorrichtung der Figuren 1 bis 3 weist ferner eine Abtriebsnabe 10 auf, welche drehbar auf dem Planetenträger 12 der Abtriebsstufe 12, 14, 16 gelagert ist. Der Planetenträger 12 ist feststehend ausgeführt und als Tragachse ausgebildet.

Die Abtriebsnabe 10 ist mittels eines als Doppelrillenkugellager ausgeführten Abtriebsnabenlagers 22 auf dem Planetenträger 12 gelagert. In demjenigen Abschnitt, in welchem das Abtriebsnabenlager 22 gegen den Planetenträger 12 abgestützt ist, ist dieser als Hohlachse ausgeführt. Ein Innendurchmesser dieser Hohlachse verjüngt sich konisch in Richtung auf die Abtriebsstufe 12, 14, 16 zu.

An dem in der Darstellung der Figur 3 rechten Ende des Planetenträgers 12 ist ein Sicherungsring 24 angeordnet, mittels welchem das Abtriebsnabenlager 22 vorgespannt ist.

Die Antriebswelle 14 ist einstückig mit dem Sonnenrad 18 verbunden. Eine Laufverzahnung 26 des Hohlrads 20 kann ebenso wie Laufverzahnungen der Planetenräder 16 und des Sonnenrades 18 als Schrägverzahnungen ausgeführt werden. Schrägungswinkel der Schrägverzahnungen sind dabei derart gewählt, dass durch die Schrägverzahnungen entstehende Axialkräfte aufgenommen werden, ohne dass es zusätzlicher Sicherungselemente bedarf.

Das Hohlrad 20 und ein Verschlussdeckel 28 sind in der Abtriebsnabe 10 aufgenommen. Ferner bildet die Abtriebsnabe 10 zusammen mit dem Planetenträger 12 der Abtriebsstufe 12, 14, 16 ein Dichtungslabyrinth 30 aus. Da die Getriebevorrichtung der Figuren 1 bis 3 für eine Ölschmierung ausgelegt ist, verhindert ein Radialwellendichtring 36 unter anderem einen Ölverlust. Das genannte Dichtungslabyrinth 30 wiederum verhindert ein Eindringen von Schmutz, welcher andernfalls zu einem vorzeitigen Verschleiß des Radialwellendichtrings 36 führen würde.

Die Getriebevorrichtung der Figuren 1 bis 3 ist sowohl als Einschub- wie auch als Vorsatzgetriebe montierbar. An seinen beiden Stirnseiten sind Bohrungen 32, 33, 34 hierfür vorgesehen. Mittels Durchgangsbohrungen 32 kann der Planetenträger 12 mit einem Antriebsmotor verbunden werden. Mittels der Gewindebohrungen 33 kann die Getriebevorrichtung in einem geeigneten Rahmen befestigt werden. Ferner kann mittels der Gewindebohrungen 34 eine Gelenkwelle mit der Abtriebsnabe 10 verbunden werden, sodass sich im Ergebnis ein Antrieb für ein gefedertes Rad ergibt. Die Getriebevorrichtung der Figuren 1 bis 3 kann jedoch auch anderweitig Verwendung finden.

Wie oben dargelegt wurde, ist in dem Ausführungsbeispiel der Figuren 1 bis 3 die Antriebswelle 14 einstückig mit dem Sonnenrad 18 verbunden. Grundsätzlich kann die Antriebswelle 14 jedoch auch Bestandteil eines Antriebsmotors sein, welcher mit der Getriebevorrichtung verbunden wird. Von einer einstückigen Verbindung der Antriebswelle mit dem Sonnenrad 18 wäre sodann zweckmäßigerweise abzusehen.

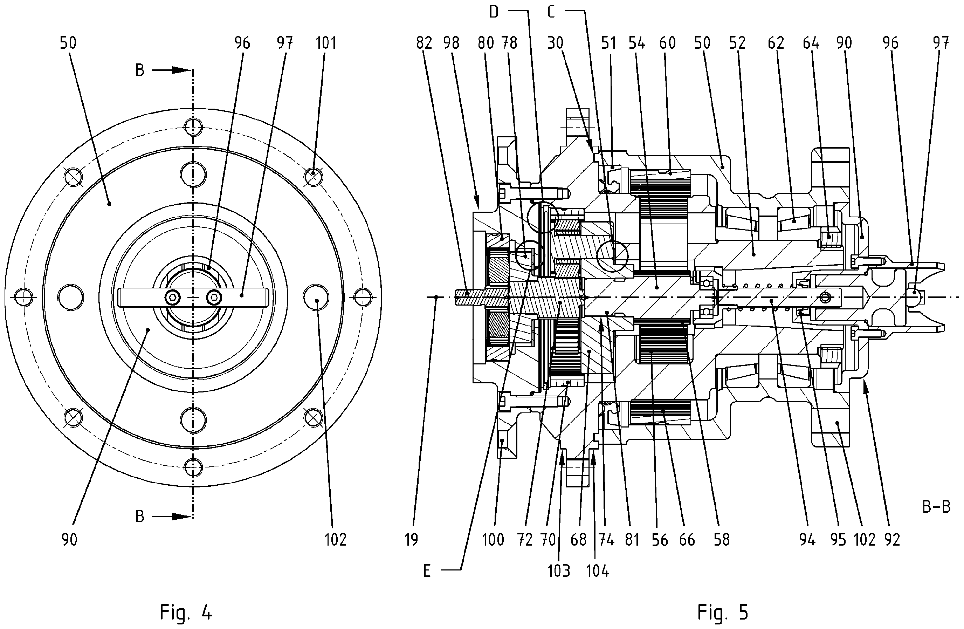

Die Figuren 4 bis 8 illustrieren ein zweites Ausführungsbeispiel der erfindungsgemäßen Getriebevorrichtung. In diesem Fall handelt es sich um eine mehrstufige, genauer gesagt um eine dreistufige, Ausgestaltungsvariante. Einer Abtriebsstufe mit einem Planetenträger 52, einer Antriebswelle 54, Planetenrädern 56, einem Sonnenrad 58 und einem Hohlrad 60 sind eine erste und eine zweite Planetenstufe vorgeschaltet. Die erste vorgelagerte Planetenstufe weist einen Planetenträger 68, ein Hohlrad 70, eine Antriebswelle 72 sowie wenigstens ein Planetenrad auf. Die zweite vorgelagerte Planetenstufe weist neben Planetenrädern wiederum einen Planetenträger 78, ein Hohlrad 80, sowie eine Antriebswelle 82 auf. Auf eine Darstellung einer Mittelachse eines Planetenradbolzens eines Planetenrades 56 der Abtriebsstufe 52, 54, 60 wurde in Figur 5 der besseren Übersicht wegen verzichtet. Ihre Lage erschließt sich in analoger Weise aus der Darstellung der Figur 3.

Die erste vorgelagerte Planetenstufe 68, 70, 72 wie auch die zweite vorgelagerte Planetenstufe 78, 80, 82 sind koaxial zu der Abtriebsstufe 52, 54, 60 angeordnet. Mittelachsen der ersten und zweiten vorgelagerten Planetenstufe 68, 70, 72, 78, 80, 82 fallen somit mit der Mittelachse 19 der Abtriebsstufe 52, 54, 60 zusammen.

Die Getriebevorrichtung der Figuren 4 bis 8 weist eine Abtriebsnabe 50 auf, welche drehbar auf dem feststehenden Planetenträger 52 der Abtriebsstufe 52, 54, 60 gelagert ist. Die Abtriebsnabe 50 ist dabei mittels eines Abtriebsnabenlagers 62, welches vorliegend als Kegelrollenlager in O-Anordnung ausgeführt ist, auf dem Planetenträger 52 der Abtriebsstufe 52, 54, 60 gelagert.

Der feststehende Planetenträger 52 der Abtriebsstufe 52, 54, 60 ist als Tragachse ausgebildet. In einem Abschnitt, in welchem das Abtriebsnabenlager 62 gegen den Planetenträger 52 der Abtriebsstufe 52, 54, 60 abgestützt ist, ist der Planetenträger als Hohlachse ausgeführt. Ein Innendurchmesser dieser Hohlachse verjüngt sich konisch in Richtung auf die Abtriebsstufe 52, 54, 60 zu.

An einem in der Figur 5 rechts dargestellten Ende des Planetenträgers 52 der Abtriebsstufe 52, 54, 60 ist eine Wellenmutter 64 angeordnet, mittels welcher das Abtriebsnabenlager 62 vorspannbar ist. Mittels der Wellenmutter 64 kann die Vorspannung des Abtriebsnabenlagers 62 komfortabel auf den jeweiligen Anwendungsfall abgestimmt werden. Die Wellenmutter 64 ist im Ausführungsbeispiel der Figuren 4 und 5 anschlagfrei ausgeführt. Sofern in jeweiligen Anwendungsfall ein Anschlag erforderlich ist, kann der Planetenträger 52 der Abtriebsstufe derart ausgestaltet werden, dass er als axialer Anschlag für die Wellenmutter 64 dient.

Im Ausführungsbeispiel der Figuren 4 bis 8 sind Sonnenräder aller Planetenstufen 52, 54, 60, 68, 70, 72, 78, 80, 82 mit den zugehörigen Antriebswellen 54, 72, 82 verbunden. Diese Verbindung ist vorzugsweise wie im dargestellten Fall einstückig ausgeführt.

Eine Laufverzahnung 66 des Hohlrads 60 der Abtriebsstufe 52, 54, 60 wie auch alle weiteren Laufverzahnungen der Abtriebsstufe 52, 54, 60 und der ersten vorgelagerten Planetenstufe 68, 70, 72 sowie der zweiten vorgelagerten Planetenstufe 78, 80, 82 können als Schrägverzahnungen ausgeführt sein. Schrägungswinkel der Schrägverzahnungen sind dabei derart gewählt, dass durch die Schrägverzahnungen entstehende Axialkräfte aufgenommen werden, ohne dass es zusätzlicher Sicherungselemente bedarf.

Bei der Getriebevorrichtung der Figuren 4 bis 8 ist ein Fluss einer mittels der Antriebswelle 82 der zweiten vorgelagerten Planetenstufe eingeleiteten Kraft zu der Abtriebsnabe 50 unterbrechbar. Die Unterbrechung des Kraftflusses wird mittels einer ausrückbaren Antriebswelle realisiert, wobei vorliegend die Antriebswelle 54 der Abtriebsstufe 52, 54, 60 ausrückbar ist.

Die ausrückbare Antriebswelle 54 der Abtriebsstufe 52, 54, 60 ist mit einem gerad- oder konischflankigen Keilwellenprofil versehen. Der Planetenträger 68 der ersten vorgelagerten Planetenstufe ist mit einem gerad- oder konischflankigen Keilnabenprofl versehen, welches mit dem Keilwellenprofil der ausrückbaren Antriebswelle 54 in Eingriff bringbar ist.

Die ausrückbare Antriebswelle 54 ist mit einer Ausrückstange 94 verbunden, welche einen Verschlussdeckel 90 durchsetzt und mit einem außerhalb der Getriebevorrichtung angeordneten Knebel 97 verbunden ist. Durch Betätigung, genauer Herausziehen, dieses Knebels 97 und damit der Ausrückstange 94 kann die ausrückbare Antriebswelle 54 ausgerückt werden. Wird dabei der Knebel um 90° gedreht, so kann der Knebel 97 in seiner Ausrückposition in einer Arretiervorrichtung 96 arretiert werden. Durch Rückdrehen des Knebels 97 kann sodann die ausrückbare Antriebswelle 54 wieder eingerückt werden. Die Arretiervorrichtung 96, mittels welcher die Ausrückstange 94 arretierbar ist, ist auf dem Verschlussdeckel 90 angeordnet.

Um ein zuverlässiges Einrücken der ausrückbaren Antriebswelle 54 zu gewährleisten, ist diese mit einem Zentrierbund 81 versehen. Dieser ist im vorliegenden Fall zylindrisch ausgeführt, kann jedoch auch konisch ausgestaltet sein. Zur Aufnahme der ausrückbaren Antriebswelle 54 ist der Planetenträger 68 der ersten vorgelagerten Planetenstufe 68, 70, 72 dementsprechend mit einem zylindrischen oder konischen Gleitsitz 74 versehen.

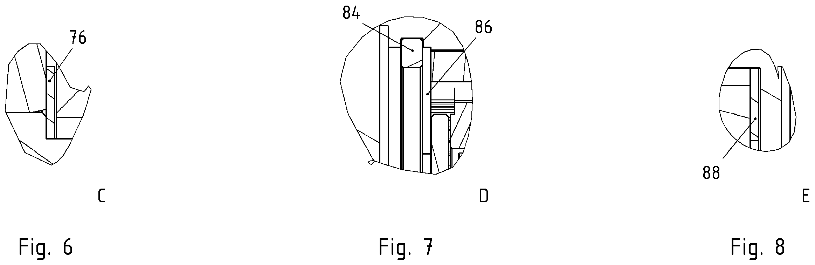

Der Planetenträger 68 der ersten vorgelagerten Planetenstufe 68, 70, 72, der somit auch der ausrückbaren Antriebswelle 54 vorgelagert ist, ist mittels einer als Axialgleitlager wirkenden Axialscheibe 76 in axialer Richtung gehalten. Diese Axialscheibe 76 ist in der vergrößerten Detaildarstellung der Figur 6 erkennbar. Wie die vergrößerte Detaildarstellung der Figur 8 zeigt, ist der Planetenträger 78 der zweiten vorgelagerten Planetenstufe ebenfalls mittels einer als Axialgleitlager wirkenden Axialscheibe 88 in axialer Richtung gehalten. Die vergrößerte Detaildarstellung der Figur 7 zeigt eine weitere Axialscheibe 86 sowie einen Sprengring 84. Bei dem dargestellten Ausführungsbeispiel handelt es sich bei den beiden Axialscheiben 76 und 88 um identische Axialscheiben. Es können offensichtlich stattdessen auch geeignete, unterschiedliche Typen verwendet werden.

Bei dem Ausführungsbeispiel der Figuren 4 bis 8 sind das Hohlrad 60 der Abtriebsstufe 52, 54, 60 und der Verschlussdeckel 90 in die Abtriebsnabe 50 aufgenommen. Ferner ist ein Radialwellendichtring 51 in die Abtriebsnabe 50 aufgenommen. Dieser Radialwellendichtring 51 läuft auf dem Planetenträger 52 der Abtriebsstufe 52, 54, 60. Ein Innendurchmesser des Radialwellendichtrings 51 ist dabei kleiner als ein Außendurchmesser des Hohlrades 60 der Abtriebsstufe 52, 54, 60.

In dem Verschlussdeckel 90 ist ein Dichtring 95 aufgenommen, welcher die Ausrückstange 94 in einem Abschnitt vollumfänglich umschließt. Als weitere Maßnahme zur Abdichtung der Getriebevorrichtung gegenüber der Umgebung bildet die Abtriebsnabe 50 zusammen mit dem Planetenträger 52 der Abtriebsstufe 52, 54, 60 ein Dichtungslabyrinth 30 aus.

Der Verschlussdeckel 90 weist eine Zentrierausformung 92 auf. Dieser dient der Zentrierung einer mit der Abtriebsnabe 50 zu verbindenden Felge. Zum Zwecke der Montage solch einer Felge ist die Abtriebsnabe 50 mit Gewindebohrungen 102 versehen.

Bei der Ausgestaltungsvariante der Figuren 4 bis 8 ist auf der anderen Stirnseite der Getriebevorrichtung ebenfalls eine Zentrierhilfe in Form eines Zentrierdurchmessers 98 vorgesehen. Bei einer Montage eines Antriebsmotors erleichtert dieser dessen Zentrierung. Zur Befestigung solch eines Antriebsmotors sind im Fall der in den Figuren 4 und 5 dargestellten Getriebevorrichtung Durchgangsbohrungen 100 vorgesehen. Gewindebohrungen 101 ermöglichen eine Befestigung in einem hierfür vorgesehenen Rahmen. Zu diesem Zwecke sind zudem auf beiden Seiten der Gewindebohrungen 101 Zentrierdurchmesser 103, 104 angeordnet. Diese sind im dargestellten Ausführungsbeispiel gleich bemessen, können je nach Anwendungsfall jedoch auch abweichend dimensioniert sein.

Die Antriebswelle 82 der zweiten vorgelagerten Planetenstufe 78, 80, 82 kann grundsätzlich auch Bestandteil eines solchen montierten Antriebsmotors sein. In solch einem Fall wäre jedoch von einer einstückigen Verbindung zwischen der Antriebswelle 82 und einem Sonnenrad der zweiten vorgelagerten Planetenstufe 78, 80, 82 in der Regel abzusehen.

### Bezugszeichenliste

- 10: Abtriebsnabe
- 12: Planetenträger
- 14: Antriebswelle
- 16: Planetenrad
- 17: Mittelachse Planetenradbolzen
- 18: Sonnenrad
- 19: Mittelachse
- 20: Hohlrad
- 22: Abtriebsnabenlager
- 24: Sicherungsring
- 26: Laufverzahnung Hohlrad
- 28: Verschlussdeckel
- 30: Dichtungslabyrinth
- 32: Durchgangsbohrung
- 33: Gewindebohrung
- 34: Gewindebohrung
- 36: Radialwellendichtring

- 50: Abtriebsnabe
- 51: Radialwellendichtring
- 52: Planetenträger der Abtriebsstufe
- 54: Antriebswelle der Abtriebsstufe
- 56: Planetenrad der Abtriebsstufe
- 58: Sonnenrad der Abtriebsstufe
- 60: Hohlrad der Abtriebsstufe
- 62: Abtriebsnabenlager
- 64: Wellenmutter
- 66: Laufverzahnung Hohlrad
- 68: Planetenträger der ersten vorgelagerten Planetenstufe
- 70: Hohlrad der ersten vorgelagerten Planetenstufe
- 72: Antriebswelle der ersten vorgelagerten Planetenstufe
- 74: Gleitsitz
- 76: Axialscheibe
- 78: Planetenträger der zweiten vorgelagerten Planetenstufe
- 80: Hohlrad der zweiten vorgelagerten Planetenstufe
- 81: Zentrierbund
- 82: Antriebswelle der zweiten vorgelagerten Planetenstufe
- 84: Sprengring
- 86: Axialscheibe
- 88: Axialscheibe
- 90: Verschlussdeckel
- 92: Zentrierausformung
- 94: Ausrückstange
- 95: Dichtring
- 96: Arretiervorrichtung
- 97: Knebel
- 98: Zentrierdurchmesser
- 100: Durchgangsbohrung
- 101: Gewindebohrung
- 102: Gewindebohrung
- 103: Zentrierdurchmesser
- 104: Zentrierdurchmesser

## Patentansprüche

1. Getriebevorrichtung aufweisend
- eine als Planetenstufe (12, 14, 16; 52, 54, 60) ausgeführte Abtriebsstufe (12, 14, 16; 52, 54, 60) und
- eine Abtriebsnabe (10; 50);
**dadurch gekennzeichnet,**
**dass** die Abtriebsnabe (10; 50) mittels wenigstens eines Abtriebsnabenlagers (22; 62) drehbar auf einem feststehenden Planetenträger (12; 52) der Abtriebsstufe (12, 14, 16; 52, 54, 60) gelagert ist, wobei der Planetenträger (12; 52) in einem Abschnitt, in dem das wenigstens eine Abtriebsnabenlager (22; 62) gegen den Planetenträger (12; 52) abgestützt ist, als Hohlachse ausgeführt ist, deren Innendurchmesser sich konisch in Richtung auf die Abtriebsstufe (12, 14, 16; 52, 54, 60) zu verjüngt.

2. Getriebevorrichtung nach Anspruch 1,
**dadurch gekennzeichnet,**
**dass** die Abtriebsnabe (10; 50) verdrehfest mit einem Hohlrad (20; 60) der Abtriebsstufe (12, 14, 16; 52, 54, 60) verbunden ist.

3. Getriebevorrichtung nach einem der vorangegangen Ansprüche,
**dadurch gekennzeichnet,**
**dass** der Abtriebsstufe (12, 14, 16; 52, 54, 60) vorgelagert mindestens eine weitere Planetenstufe (68, 70, 72, 78, 80, 82) angeordnet ist, wobei diese mindestens eine weitere Planetenstufe (68, 70, 72, 78, 80, 82) koaxial zu der Abtriebsstufe (12, 14, 16; 52, 54, 60) angeordnet ist.

4. Getriebevorrichtung nach Anspruch 3,
**dadurch gekennzeichnet,**
**dass** wenigstens eine weitere Getriebestufe (68, 70, 72, 78, 80, 82) als Planetenstufe (68, 70, 72, 78, 80, 82) mit feststehendem Hohlrad (70, 80) ausgeführt ist.

5. Getriebevorrichtung nach einem der vorangehenden Ansprüche,
**dadurch gekennzeichnet,**
**dass** an einem Ende des Planetenträgers (12; 52) der Abtriebsstufe (12, 14, 16; 52, 54, 60) eine Spannvorrichtung (24; 64) angeordnet ist, mittels welcher das wenigstens eine Abtriebsnabenlager (22; 62) vorspannbar ist.

6. Getriebevorrichtung nach einem der vorangehenden Ansprüche,
**dadurch gekennzeichnet,**
**dass** der Planetenträger (12; 52) der Abtriebsstufe (12, 14, 16; 52, 54, 60) in zumindest einem Abschnitt, in welchem das wenigstens eine Abtriebsnabenlager (22; 62) gegen den Planetenträger (12; 52) der Abtriebsstufe (12, 14, 16; 52, 54, 60) abgestützt ist, einen Durchmesser aufweist, welcher 1,1 bis 2,5 mal so groß ist wie ein Abstand einer Mittelachse (17) eines Planetenradbolzens der Abtriebsstufe (12, 14, 16; 52, 54, 60) von einer Mittelachse (19) der Abtriebsstufe (12, 14, 16; 52, 54, 60).

7. Getriebevorrichtung nach einem der vorangegangen Ansprüche,
**dadurch gekennzeichnet,**
**dass** der Fluss einer in die Getriebevorrichtung eingeleiteten Kraft zu der Abtriebsnabe (10; 50) unterbrechbar ist.

8. Getriebevorrichtung nach Anspruch 7,
**dadurch gekennzeichnet,**
**dass** der Fluss einer in die Getriebevorrichtung eingeleiteten Kraft zu der Abtriebsnabe (10; 50) mittels wenigstens einer ausrückbaren Antriebswelle (14; 54) unterbrechbar ist.

9. Getriebevorrichtung nach einem der Ansprüche 7 bis 8, **dadurch gekennzeichnet,**
**dass** die Antriebswelle (54) der Abtriebsstufe (52, 54, 60) ausrückbar ist.

10. Getriebevorrichtung nach einem der vorangegangen Ansprüche, **dadurch gekennzeichnet,**
**dass** das Hohlrad (20; 60) der Abtriebsstufe (12, 14, 16; 52, 54, 60) und/oder ein Verschlussdeckel (28; 90) in der Abtriebsnabe (10; 50) aufgenommen ist.

11. Getriebevorrichtung nach Anspruch 10,
**dadurch gekennzeichnet,**
**dass** der Verschlussdeckel (90) eine Ausformung (92) zur Zentrierung einer an die Abtriebsnabe (50) montierbaren Felge aufweist.

12. Getriebevorrichtung nach Anspruch 8 und nach einem der Ansprüche 10 bis 11,
**dadurch gekennzeichnet,**
**dass** eine mit der ausrückbaren Antriebswelle (54) verbundene Ausrückstange (94) den Verschlussdeckel (90) durchsetzt.

13. Getriebevorrichtung nach Anspruch 8 und einem der Ansprüche 10 bis 11 oder nach Anspruch 12,
**dadurch gekennzeichnet,**
**dass** der Verschlussdeckel (90) mit einer Arretiervorrichtung (96) versehen ist, mittels welcher die mit der ausrückbaren Antriebswelle (54) verbundene Ausrückstange (94) arretierbar ist.

14. Getriebevorrichtung nach Anspruch 1, **dadurch gekennzeichnet, dass**
- die Abtriebsstufe (12, 14, 16; 52, 54, 60) eine Antriebswelle (14; 54), mehrere Planetenräder (16; 56) und ein Hohlrad (20; 60) aufweist;
- der feststehende Planetenträger (12; 52) der Abtriebsstufe (12, 14, 16; 52, 54, 60) als Tragachse ausgebildet ist;
- Laufverzahnungen (26; 66) der Abtriebsstufe (12, 14, 16; 52, 54, 60) und/oder wenigstens einer weiteren Getriebestufe (68, 70, 72, 78, 80, 82) zumindest teilweise als Schrägverzahnungen ausgeführt sind;
- der Planetenträger (12; 52, 68, 78) wenigstens einer Getriebestufe (12, 14, 16; 52, 54, 60, 68, 70, 72, 78, 80, 82) mit mindestens einer Ölfangtasche versehen ist;
- der Planetenträger (12; 52) der Abtriebsstufe (12, 14, 16; 52, 54, 60) mit Bohrungen zur Ausbildung einer Umlaufschmierung versehen ist;
- die Abtriebsnabe (10; 50) zusammen mit dem Planetenträger (12; 52) der Abtriebssstufe (12, 14, 16; 52, 54, 60) ein Dichtungslabyrinth (30) ausbildet;
- die Getriebevorrichtung frei von Wartungsbohrungen ist;
- und die Getriebevorrichtung hermetisch verschlossen ist.

## Claims

1. A transmission device that has
- an output stage (12, 14, 16; 52, 54, 60) designed as a planetary stage (12, 14, 16; 52, 54, 60) and
- an output hub (10; 50);
**characterised in**
**that** the output hub (10; 50) is rotatably mounted on a fixed planetary carrier (12; 52) of the output stage (12, 14, 16; 52, 54, 60) by means of at least one output hub bearing (22; 62), wherein the planetary carrier (12; 52), in a section in which the at least one output hub bearing (22; 62) is supported against the planetary carrier (12; 52), is designed as a hollow axle whose internal diameter tapers conically in the direction of the output stage (12, 14, 16; 52, 54, 60).

2. The transmission device according to claim 1,
**characterised in**
**that** the output hub (10; 50) is connected in a rotationally fixed manner to a hollow wheel (20; 60) of the output stage (12, 14, 16; 52, 54, 60).

3. The transmission device according to one of the preceding claims,
**characterised in**
**that** at least one further planetary stage (68, 70, 72, 78, 80, 82) is arranged upstream of the output stage (12, 14, 16; 52, 54, 60), wherein this at least one further planetary stage (68, 70, 72, 78, 80, 82) is arranged coaxially to the output stage (12, 14, 16; 52, 54, 60).

4. The transmission device according to claim 3,
**characterised in**
**that** at least one further gear stage (68, 70, 72, 78, 80, 82) is designed as a planetary stage (68, 70, 72, 78, 80, 82) with a fixed hollow wheel (70, 80).

5. The transmission device according to one of the preceding claims,
**characterised in**
**that** at one end of the planetary carrier (12; 52) of the output stage (12, 14, 16; 52, 54, 60) there is a clamping device (24; 64) by means of which the at least one output hub bearing (22; 62) can be pre-tensioned.

6. The transmission device according to one of the preceding claims,
**characterised in**
**that** the planetary carrier (12; 52) of the output stage (12, 14, 16; 52, 54, 60), in at least one section in which the at least one output hub bearing (22; 62) is supported by the planetary carrier (12; 52) of the output stage (12, 14, 16; 52, 54, 60), has a diameter which is 1.1 to 2.5 times greater than a distance of a centre axle (17) of a planetary wheel bolt of the output stage (12, 14, 16; 52, 54, 60) from a centre axle (19) of the output stage (12, 14, 16; 52, 54, 60) .

7. The transmission device according to one of the preceding claims,
**characterised in**
**that** the flow of a force introduced into the transmission device to the output hub (10; 50) is interruptible.

8. The transmission device according to claim 7,
**characterised in**
**that** the flow of a force introduced into the transmission device to the output hub (10; 50) is interruptible by means of at least one disengageable drive shaft (14; 54).

9. The transmission device according to claims 7 to 8,
**characterised in**
**that** the drive shaft (54) of the output stage (52, 54, 60) is disengageable.

10. The transmission device according to one of the preceding claims,
**characterised in**
**that** the hollow wheel (20; 60) of the output stage (12, 14, 16; 52, 54, 60) and/or a closure cover (28; 90) is received in the output hub (10; 50).

11. The transmission device according to claim 10,
**characterised in**
**that** the closure cover (90) has a moulded shape (92) for centring a rim that can be mounted on the output hub (50).

12. The transmission device according to claim 8 and according to one of claims 10 to 11,
**characterised in**
**that** a release rod (94) connected to the disengageable drive shaft (54) penetrates the closure cover (90).

13. The transmission device according to claim 8 and according to one of claims 10 to 11 or according to claim 12,
**characterised in**
**that** the closure cover (90) is equipped with a locking device (96) by means of which the release rod (94) connected to the disengageable drive shaft (54) can be locked.

14. The transmission device according to claim 1, **characterised in that**
- the output stage (12, 14, 16; 52, 54, 60) has a drive shaft (14; 54), several planetary wheels (16; 56) and a hollow wheel (20; 60);
- the fixed planetary carrier (12; 52) of the output stage (12, 14, 16; 52, 54, 60) is designed as a supporting axle;
- running gears (26; 66) of the output stage (12, 14, 16; 52, 54, 60) and/or at least one further gear stage (68, 70, 72, 78, 80, 82) are at least partially designed as helical gears;
- the planetary carrier (12; 52, 68, 78) has at least one gear stage (12, 14, 16; 52, 54, 60, 68, 70, 72, 78, 80, 82) with at least one oil catcher;
- the planetary carrier (12; 52) of the output stage (12, 14, 16; 52, 54, 60) is provided with holes to form circular lubrication;
- the output hub (10; 50) together with the planetary carrier (12; 52) of the output stage (12, 14, 16; 52, 54, 60) forms a sealing labyrinth (30);
- the transmission device is free of maintenance holes;
- and the transmission device is hermetically sealed.

## Revendications

1. L'invention concerne un dispositif de transmission,
- comprenant un étage de sortie (12, 14, 16 ; 52, 54, 60) réalisé sous forme d'étage planétaire (12, 14, 16 ; 52, 54, 60) et
- un moyeu de sortie(10 ; 50) ;
**caractérisé en ce que**
le moyeu de sortie (10 ; 50) est monté de manière rotative sur un porte-satellites fixe (12 ; 52) de l'étage de sortie (12, 14, 16 ; 52, 54, 60) à l'aide d'au moins un palier de moyeu de sortie (22 ; 62), une section du porte-satellites (12 ; 52), dans laquelle ledit au moins un palier de moyeu de sortie (22 ; 62) est appuyé contre le porte-satellites (12 ; 52), étant réalisée sous forme d'un essieu creux dont le diamètre intérieur diminue de manière conique en direction de l'étage de sortie (12, 14, 16 ; 52, 54, 60).

2. Dispositif de transmission selon la revendication 1,
**caractérisé en ce que**
le moyeu de sortie (10 ; 50) est relié de manière solidaire en rotation à une couronne dentée (20 ; 60) de l'étage de sortie (12, 14, 16 ; 52, 54, 60) .

3. Dispositif de transmission selon l'une des revendications précédentes,
**caractérisé en ce**
**qu'**au moins un étage planétaire supplémentaire (68, 70, 72, 78, 80, 82) est disposé en amont de l'étage de sortie (12, 14, 16 ; 52, 54, 60), ledit au moins un étage planétaire supplémentaire (68, 70, 72, 78, 80, 82) étant disposé de manière coaxiale par rapport à l'étage de sortie (12, 14, 16 ; 52, 54, 60) .

4. Dispositif de transmission selon la revendication 3,
**caractérisé en ce**
**qu'**au moins un étage de transmission supplémentaire (68, 70, 72, 78, 80, 82) est réalisé sous forme d'étage planétaire (68, 70, 72, 78, 80, 82) à couronne fixe (70, 80).

5. Dispositif de transmission selon l'une des revendications précédentes,
**caractérisé en ce**
**qu'**un dispositif de tension (24 ; 64) est disposé à une extrémité du porte-satellites (12 ; 52) de l'étage de sortie (12, 14, 16 ; 52, 54, 60), permettant de précontraindre ledit au moins un palier de moyeu de sortie (22; 62).

6. Dispositif de transmission selon l'une des revendications précédentes,
**caractérisé en ce**
**qu'**au moins une section du porte-satellites (12 ; 52) de l'étage de sortie (12, 14, 16 ; 52, 54, 60), dans laquelle ledit au moins un palier de moyeu de sortie (22 ; 62) est appuyé contre le porte-satellites (12 ; 52) de l'étage de sortie (12, 14, 16 ; 52, 54, 60), présente un diamètre correspondant à 1,1 à 2,5 fois l'écart d'un axe central (17) d'un pivot de roue satellite de l'étage de sortie (12, 14, 16 ; 52, 54, 60) par rapport à un axe central (19) de l'étage de sortie (12, 14, 16 ; 52, 54, 60).

7. Dispositif de transmission selon l'une des revendications précédentes,
**caractérisé en ce que**
le flux d'une force introduite dans le dispositif de transmission en direction du moyeu de sortie (10 ; 50) peut être interrompu.

8. Dispositif de transmission selon la revendication 7,
**caractérisé en ce que**
le flux d'une force introduite dans le dispositif de transmission en direction du moyeu de sortie (10 ; 50) peut être interrompu à l'aide d'au moins un arbre de transmission débrayable (14 ; 54).

9. Dispositif de transmission selon l'une des revendications 7 à 8,
**caractérisé en ce que**
l'arbre de transmission (54) de l'étage de sortie (52, 54, 60) est débrayable.

10. Dispositif de transmission selon l'une des revendications précédentes,
**caractérisé en ce que**
la couronne dentée (20 ; 60) de l'étage de sortie (12, 14, 16 ; 52, 54, 60) et/ou un couvercle d'obturation (28 ; 90) est logé(e) dans le moyeu de sortie (10 ; 50).

11. Dispositif de transmission selon la revendication 10,
**caractérisé en ce que**
le couvercle d'obturation (90) présente une protubérance (92) pour le centrage d'une jante pouvant être montée sur le moyeu de sortie (50).

12. Dispositif de transmission selon la revendication 8 et selon l'une des revendications 10 à 11,
**caractérisé en ce**
**qu'**une biellette de débrayage (94) reliée à l'arbre de transmission débrayable (54) passe à travers le couvercle d'obturation (90).

13. Dispositif de transmission selon la revendication 8 et selon l'une des revendications 10 à 11 ou selon la revendication 12,
**caractérisé en ce que**
le couvercle d'obturation (90) est muni d'un dispositif d'arrêt (96) à l'aide duquel la biellette de débrayage (94) reliée à l'arbre de transmission débrayable (54) peut être arrêtée.

14. Dispositif de transmission selon la revendication 1, **caractérisé en ce que**
- l'étage de sortie (12, 14, 16 ; 52, 54, 60) comprend un arbre de transmission (14 ; 54), plusieurs roues satellites (16 ; 56) et une couronne dentée (20 ; 60) ;
- le porte-satellites fixe (12 ; 52) de l'étage de sortie (12, 14, 16 ; 52, 54, 60) est réalisé sous forme d'essieu porteur ;
- les dentures de transmission (26 ; 66) de l'étage de sortie (12, 14, 16 ; 52, 54, 60) et/ou d'au moins un étage de transmission supplémentaire (68, 70, 72, 78, 80, 82) sont au moins partiellement réalisées sous forme de dentures hélicoïdales ;
- le porte-satellites (12 ; 52, 68, 78) d'au moins un étage de transmission (12, 14, 16 ; 52, 54, 60, 68, 70, 72, 78, 80, 82) est muni d'au moins une poche collectrice d'huile ;
- le porte-satellites (12 ; 52) de l'étage de sortie (12, 14, 16 ; 52, 54, 60) est muni d'alésages pour la formation d'une lubrification par circulation ;
- le moyeu de sortie (10 ; 50) et le porte-satellites (12 ; 52) de l'étage de sortie (12, 14, 16 ; 52, 54, 60) forment ensemble un labyrinthe d'étanchéité (30) ;
- le dispositif de transmission est exempt d'alésages de maintenance ;
- et le dispositif de transmission est fermé hermétiquement.
